# EUROPEAN PATENT SPECIFICATION

(11) **EP 4 270 058 B1**
(45) Date of publication and mention of the grant of the patent: **17.06.2026**
(21) Application number: 23170024.6
(22) Date of filing: 26.04.2023
(51) Int. Cl.: G01S 17/931, G01S 7/497, G01S 7/481

(54) **LASER RADAR AND LASER RADAR-BASED DETECTION METHOD**
LASERRADAR UND LASERRADARBASIERTES DETEKTIONSVERFAHREN
RADAR LASER ET PROCÉDÉ DE DÉTECTION BASÉ SUR UN RADAR LASER

(30) Priority: 27.04.2022 CN 202210451062
(43) Date of publication of application: 01.11.2023
(73) Proprietor: Nio Technology (Anhui) Co., Ltd, Hefei City, Anhui 230601 (CN)
(72) Inventor: SHEN, Ge, Hefei, Anhui, 230601 (CN); RONG, Hao, Hefei, Anhui, 230601 (CN); DENG, Yongzhang, Hefei, Anhui, 230601 (CN); YANG, Yang, Hefei, Anhui, 230601 (CN)
(74) Representative: Vossius & Partner Patentanwälte Rechtsanwälte mbB

(56) References cited:
- US-A1- 2020 110 259
- US-A1- 2022 057 203

## Description

### Technical Field

The disclosure relates to the field of automobiles, and in particular, to a laser radar and a laser radar-based detection method using such a laser radar.

### Background Art

A laser radar can provide accurate measurement of a distance from a measured object, and is a crucial distance measurement sensor device. Currently, laser radars usually have mechanical components, optical components, and numerous electronic components inside. Laser radar products are yet to be proven for large-scale and reliable applications. Therefore, the ability to detect faults in the application of the laser radar products is required to ensure the reliability of the laser radar.

Particularly, for various current autonomous driving systems, the optical components, electronic components, and mechanical components inside a vehicle-mounted laser radar are often subject to faults due to the bumps and impacts caused by traveling at a high speed. The large-scale use of vehicle-mounted laser radar products will face the test of product reliability in harsh application environments. Therefore, the ability to detect faults in the application of the vehicle-mounted laser radar products is required to ensure the reliability of the vehicle-mounted laser radar.

As the vehicle-mounted laser radar products will play a role in the entire 15-20-year life cycle of an autonomous driving vehicle, a method for testing the reliability of the laser radar in applications is needed, otherwise it is difficult to ensure that laser radar products meet the technical parameter requirements in the entire life cycle, for example, provide correct/accurate distance measurement data for autonomous driving systems. Ultimately, accidents may further occur due to inaccurate vehicle-mounted laser radar ranging.

US2020/0110259A1 discloses an optoelectronic sensor for detecting objects. The optoelectronic sensor has a light transmitter, a deflection unit, a light receiver, and a control and evaluation unit that is configured to determine information on the objects by means of the reception signal received by the light receiver. The optoelectronic sensor has at least one reference target that receives at least a portion of the deflected transmission light beam at at least one deflection angle of the deflection unit or returns it to the light receiver in order to generate a reference signal. The control and evaluation unit is configured to check the operability of the deflection unit by means of the reference signal.

US2022/0057203A1 discloses a distance measurement device comprising a reflective object disposed at a position of a predetermined distance along a path of the light from a light source that emits light and a light-receiving element that receives respective reflective lights from the reflective object and a target on the path.

Therefore, it is quite necessary to carry out adequate studies on the existing problems or defects including those mentioned above, so as to make improvements.

### Summary

The subject-matter of the present invention is defined by the features of independent claim 1. Further preferred embodiments of the present invention are defined in the dependent claims. In particular, the disclosure proposes a laser radar, which can ensure the reliability of the laser radar.

According to the laser radar proposed in one aspect of the disclosure, the laser radar includes:
a housing;
a laser transmitter provided in the housing, configured to transmit laser light;
an optical window provided at the housing, where the laser light transmitted from the laser transmitter leaves the housing through the optical window, and laser light reflected by a target object returns to the interior of the housing through the optical window;
a laser receiver provided in the housing, configured to receive the laser light reflected by the target object; and
an optical template, where a portion of the laser light transmitted from the laser transmitter is reflected by the optical template to the laser receiver, wherein the optical template comprises a plurality of sub-templates and a light-absorbing region is provided at the boundary of each sub-template.

According to the laser radar proposed in one aspect of the disclosure, the laser radar is a vehicle-mounted laser radar.

According to the laser radar proposed in one aspect of the disclosure, the laser radar includes:
a rotating mirror, the rotating mirror having an axis of rotation perpendicular to an XOY plane; and
a galvo mirror, the galvo mirror having an axis of rotation perpendicular to an XOZ plane.

According to the laser radar proposed in one aspect of the disclosure, a light-absorbing region is provided at the boundary of the optical template.

According to the laser radar proposed in one aspect of the disclosure, the optical template is provided in an optical path inside the housing.

According to the laser radar proposed in one aspect of the disclosure, the laser radar includes an optical-to-electrical conversion module and a cable connector.

In addition, the disclosure proposes a laser radar-based detection method, which performs detection by using such a laser radar. Since the laser radar-based detection method uses the laser radar according to the disclosure, it can offer the advantages as described above. Further, the laser radar-based detection method includes the following steps:
a) calibrating a parameter of the optical template to obtain a standard value; and
b) measuring the parameter of the optical template to obtain a measurement value and comparing the measurement value with the standard value, and if a difference between the measurement value and the standard value exceeds a specific threshold, it is determined that the laser radar is faulty.

According to the laser radar-based detection method proposed in one aspect of the disclosure, the parameter of the optical template includes reflection intensity of the optical template to laser light and coordinates of the optical template.

According to the laser radar-based detection method proposed in one aspect of the disclosure, a geometric center or an optical center of gravity of the optical template is calculated as the coordinates of the optical template.

According to the laser radar-based detection method proposed in one aspect of the disclosure, the boundary of the optical template is determined based on a sudden change in reflection intensity near a light-absorbing region.

According to the laser radar-based detection method proposed in one aspect of the disclosure, the laser radar is a vehicle-mounted laser radar, and in step b), a parameter of the optical template is measured in real time during the traveling of a vehicle.

The beneficial effects of the disclosure include: providing the optical template in the laser radar and using the optical template for detection make it possible to determine whether the laser radar is faulty, thereby ensuring the reliability of the laser radar.

### Brief Description of the Drawings

The disclosed content of the disclosure is described with reference to the accompanying drawings. It should be appreciated that the accompanying drawings are merely used for the purpose of illustration, and are not intended to limit the scope of protection of the disclosure, defined by the appended claims. In the figures:
FIG. 1 illustrates a laser radar according to an implementation of the disclosure; and
FIG. 2 illustrates an optical template in a laser radar according to an implementation of the disclosure.

### Detailed Description of Embodiments

It can be readily understood that according to the technical solution of the disclosure, a person of ordinary skill in the art may propose a plurality of interchangeable structures and implementations without departing from the scope of the appended claims. Therefore, the following specific embodiments and the accompanying drawings are merely exemplary descriptions of the technical solution of the disclosure, and should not be construed as the entirety of the disclosure or construed as limiting the technical solution of the disclosure, which is defined only by the claims.

A coordinate system established in this specification is described below. The origin O of the coordinate system coincides with the center of mass of a vehicle, and XOZ is in a bilaterally symmetrical plane of the vehicle. When the vehicle is traveling on a horizontal road, the X-axis points forward parallel to the ground, the Y-axis points to the left of the driver, and the Z-axis points upwards through the center of mass.

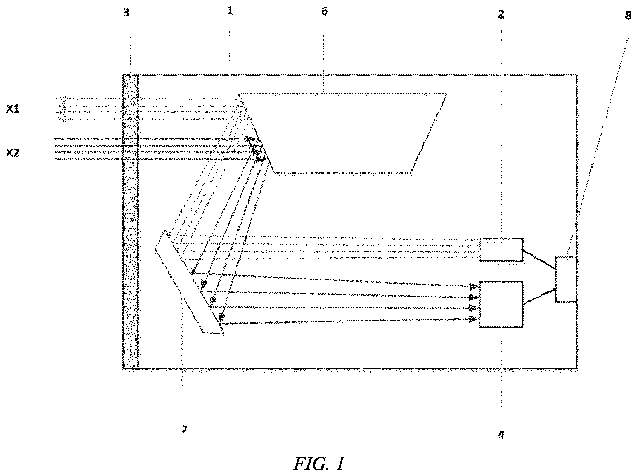

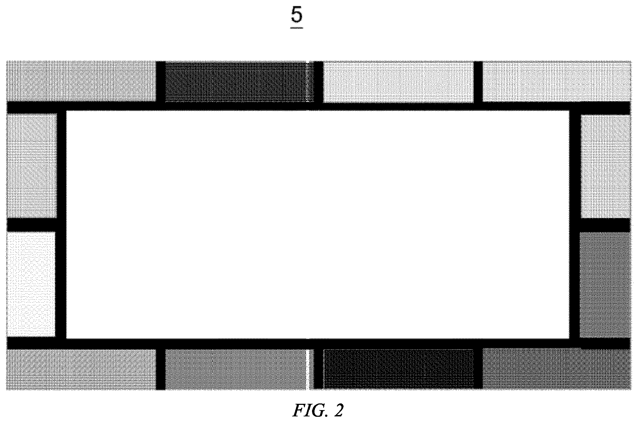

According to one implementation of the disclosure with reference to FIG. 1 and FIG. 2, the following can be seen: A laser radar includes: a housing 1; a laser transmitter 2 (for example, a laser transmitting array) provided in the housing, configured to transmit laser light; an optical window 3 provided at the housing, where the laser light transmitted from the laser transmitter 2 leaves the housing through the optical window 3 (see the laser beam X1 shown by the light-colored arrows in FIG. 1), and laser light reflected by a target object (i.e., a detection target of the laser radar) returns to the interior of the housing through the optical window 3 (see the laser beam X2 shown by the dark arrows in FIG. 1); a laser receiver 4 (for example, a laser receiving array) provided in the housing, configured to receive the laser light reflected by the target object; and an optical template 5, where a portion of the laser light transmitted from the laser transmitter 2 is reflected by the optical template 5 to the laser receiver 4.

The laser radar can be fastened to the ground as a fixed laser radar, or the laser radar can be fastened to the vehicle as a vehicle-mounted laser radar.

Providing the optical template in the laser radar according to this implementation and using the optical template for detection make it possible to determine whether the laser radar is faulty, thereby ensuring the reliability of the laser radar.

For example, a parameter of the optical template is measured in real time during the traveling of the vehicle, and if a difference between a measurement value and a standard value previously obtained by calibration exceeds a specific threshold, it is determined that the vehicle-mounted laser radar is faulty and an alarm signal is sent, thus confirming the reliability of the vehicle-mounted laser radar in real time during the traveling of the vehicle and improving the traveling safety of the vehicle.

Further, the laser radar includes a rotating mirror 6, the rotating mirror having an axis of rotation perpendicular to an XOY plane. The rotating mirror is in a necessary optical path of the laser light from the laser transmitter to the optical window, and the laser light is reflected by the rotating mirror. With the rotation of the rotating mirror about the axis of rotation perpendicular to the XOY plane, it is possible to adjust the horizontal angle of the laser light leaving the housing through the optical window, thereby covering a detectable range of the laser radar in the horizontal direction.

Still further, the laser radar includes a galvo mirror 7, the galvo mirror having an axis of rotation perpendicular to an XOZ plane. The galvo mirror is in a necessary optical path of the laser light from the laser transmitter to the optical window, and the laser light is reflected by the galvo mirror. With the rotation of the galvo mirror about the axis of rotation perpendicular to the XOZ plane, it is possible to adjust the vertical angle of the laser light leaving the housing through the optical window, thereby covering a detectable range of the laser radar in the vertical direction.

For example, a portion of the laser light transmitted from the laser transmitter is sequentially reflected by the galvo mirror and the rotating mirror to the optical template, and reflected by the optical template, then sequentially reflected by the rotating mirror and the galvo mirror, and returned to and received by the laser receiver.

For example, with reference to FIG. 2, a light-absorbing region (an absorptive region), such as a black region, is provided at the boundary of the optical template. The main body portion of the optical template (excluding the boundary) is composed of reflective regions with a specific reflectivity, and the boundary of the optical template is composed of light-absorbing regions with an extremely low reflectivity. There is a significant difference between the reflectivities of the reflective regions and absorptive regions of the optical template to the laser light. By the light-absorbing region provided at the boundary of the optical template, the optical template can be significantly distinguished from the surrounding environment, which is beneficial to the identification of the optical template, and therefore is beneficial to the identification of the position of the optical template. In FIG. 2, only a light-absorbing region at the inner boundary of the optical template (i.e., the black box around the middle white region) is shown, although it is certainly possible to provide a light-absorbing region at the outer boundary of the optical template.

The optical template is provided in an optical path inside the housing. The optical template can be provided at the optical window. For example, the optical template is glued onto the glass at the optical window by means of a glue. The optical template may be alternatively fastened at the housing by other means. For example, the optical template is fastened by using a bracket extending into the interior of the housing, where the bracket is in a laser transmitting path between the rotating mirror and the optical window.

The optical template includes a plurality of sub-templates, which preferably have different reflectivities. For example, one sub-template is green, and the other is red purple, so they have different reflectivities. Parameter of sub-templates can be measured separately, and finally the parameters of the sub-templates are combined. Preferably, coordinates of the two sub-templates (such as X coordinates, Y coordinates, and Z coordinates) are as different as possible to facilitate the determination of feature quantities during data analysis, and to provide more accurate measurement results. With reference to FIG. 2, a light-absorbing region is provided between adjacent sub-templates, and a light-absorbing region is also provided at the boundary of each sub-template, to facilitate the distinguishing and identification of each sub-template.

Each sub-template can be arranged adjacent to each other. For example, as shown in FIG. 2, the sub-templates are arranged in a continuous ring around the transmitted laser light. In this case, the outer boundary of a reflective template is a boundary that can be scanned by the laser light, and the inner boundary of the reflective template is an effective boundary that needs to be used by the laser radar to measure objects at long distances. In addition, the sub-templates can also be arranged at intervals, for example, one sub-template is provided at the upper left of the optical window, and the other sub-template is provided at the lower right of the optical window. The sub-templates in the figure are schematically rectangular, but each sub-template can be of various shapes, such as squares, circles, triangles, trapezoids, and irregular shapes.

In addition, the laser radar may further include an optical-to-electrical conversion module and a cable connector 8, where the optical-to-electrical conversion module is configured to convert a laser signal received by the laser receiver into an electrical signal, and transmit the electrical signal by means of the cable connector. The laser transmitter may be further powered through the cable connector.

The disclosure further discloses a laser radar-based detection method, which performs detection by using the laser radar according to any one or more of the implementations above. The laser radar-based detection method includes the following steps: a) (e.g., at delivery) calibrating a parameter of the optical template to obtain a standard value, and the parameter obtained by calibrating the optical template is stored, for example, in a computing unit of the laser radar or a controller of a vehicle; and b) measuring the parameter of the optical template to obtain a measurement value and comparing the measurement value with the standard value, and if a difference between the measurement value and the standard value exceeds a specific threshold (for example, the difference exceeds 0.1%, 0.2%, 0.5%, 1%, 2%, 5%, 10%, 15%, 20%, 25%, or 30%), it is determined that the laser radar is faulty.

In the laser radar-based detection method according to this implementation, using the optical template for detection makes it possible to determine whether the laser radar is faulty, thereby ensuring the reliability of the laser radar.

Further, the laser radar is a vehicle-mounted laser radar, and in step b), the parameter of the optical template is measured in real time during the traveling of the vehicle, and if the difference between the measurement value and the standard value previously obtained by calibration exceeds a specific threshold, it is determined that the vehicle-mounted laser radar is faulty and an alarm signal is sent, thus confirming the reliability of the vehicle-mounted laser radar in real time during the traveling of the vehicle and improving the traveling safety of the vehicle.

For example, with the optical window as a reference (i.e., within a YOZ plane), the galvo mirror and the rotating mirror cooperate such that the laser light transmitted from the laser transmitter scans all points in the optical window, from left to right and from top to bottom sequentially.

The parameter of the optical template may include reflection intensity of the optical template to laser light and coordinates of the optical template. For example, the optical template may be configured with different colors so that it has different reflection intensities. In actual measurements, due to differences in manufacturing, installation, distance from the laser source, or ambient irradiation conditions, optical templates that are originally configured with the same color (i.e., the same reflection intensity) may not actually have the same measured reflection intensity. Therefore, a specific algorithm may be used to fit the measurement values of all sampling points in one optical template to obtain the reflection intensities and coordinates of the optical template. For example, a geometric center or an optical center of gravity of the optical template is calculated as the coordinates of the optical template, and the reflection intensity at the geometric center or the optical center of gravity of the optical template is used as the reflection intensity of that optical template. The geometric center is an average value of the coordinates of all points in the optical template, and the optical center of gravity is a weighted average value of the coordinates of all points in the optical template multiplied by reflection intensities.

In addition, the boundary of the optical template may be determined based on a sudden change in reflection intensity near a light-absorbing region. For example, a light-absorbing region (an absorptive region), such as a black region, is provided at the boundary of the optical template. The main body portion of the optical template (excluding the boundary) is composed of reflective regions with a specific reflectivity, and the boundary of the optical template is composed of light-absorbing regions with an extremely low reflectivity. There is a significant difference between the reflectivities of the reflective regions and absorptive regions of the optical template to the laser light, so that there is a sudden change in their measured reflection intensities.

When the vehicle-mounted laser radar is faulty, the controller of the vehicle sends a fault signal. For example, after optical-to-electrical conversion, a laser signal received by the laser receiver is transmitted to the computing unit through a cable connector and a cable, and a fault signal is sent to the controller of the vehicle after it is determined that a fault has occurred; or directly transmitted to the controller for calculation and fault determination.

Further, measurement results may be used to determine the specific part that is faulty. For example, if a Y-axis coordinate of the optical template deviates from the standard value, the rotating mirror may be faulty; if a Z-axis coordinate of the optical template deviates from the standard value, the galvo mirror may be faulty; or if the transmitting intensity of the optical template deviates from the standard value, other parts, such as the laser transmitter, the laser receiver, or the optical-to-electrical conversion module, may be faulty.

## Claims

1. A laser radar comprising:
a housing (1);
a laser transmitter (2) provided in the housing, configured to transmit laser light;
an optical window (3) provided at the housing, wherein the laser light transmitted from the laser transmitter (2) leaves the housing (1) through the optical window (3), and laser light reflected by a target object returns to the interior of the housing through the optical window (3);
a laser receiver (4) provided in the housing, configured to receive the laser light reflected by the target object; and
an optical template (5), wherein a portion of the laser light transmitted from the laser transmitter (2) is reflected by the optical template to the laser receiver (4),
wherein the optical template comprises a plurality of sub-templates and **characterised in that** a light-absorbing region is provided at the boundary of each sub-template.

2. The laser radar according to claim 1, wherein the laser radar is a vehicle-mounted laser radar.

3. The laser radar according to claim 1 or 2, wherein the laser radar comprises:
a rotating mirror (6), the rotating mirror having an axis of rotation perpendicular to an XOY plane; and
a galvo mirror(7), the galvo mirror having an axis of rotation perpendicular to an XOZ plane.

4. The laser radar according to any one of claims 1 to 3, wherein a light-absorbing region is provided at the boundary of the optical template.

5. The laser radar according to any one of claims 1 to 4, wherein the optical template is provided in an optical path inside the housing.

6. The laser radar according to any one of claims 1 to 5, wherein the laser radar comprises an optical-to-electrical conversion module and a cable connector.

7. A laser radar-based detection method, which performs detection by using a laser radar according to any one of claims 1 to 6, wherein the laser radar-based detection method comprises the following steps:
a) calibrating a parameter of an optical template to obtain a standard value; and
b) measuring the parameter of the optical template to obtain a measurement value and comparing the measurement value with the standard value, and if a difference between the measurement value and the standard value exceeds a specific threshold, it is determined that the laser radar is faulty.

8. The laser radar-based detection method according to claim 7, wherein the parameter of the optical template comprises reflection intensity of the optical template to laser light and coordinates of the optical template.

9. The laser radar-based detection method according to claim 8, wherein a geometric center or an optical center of gravity of the optical template is calculated as the coordinates of the optical template.

10. The laser radar-based detection method according to any one of claims 7 to 9, wherein the boundary of the optical template is determined based on a sudden change in reflection intensity near a light-absorbing region.

11. The laser radar-based detection method according to any one of claims 7 to 10, wherein the laser radar is a vehicle-mounted laser radar, and in step b), a parameter of the optical template is measured in real time during the traveling of a vehicle.

## Patentansprüche

1. Laserradar, das Folgendes umfasst:
ein Gehäuse (1);
einen Lasersender (2), der im Gehäuse bereitgestellt ist und konfiguriert ist, Laserlicht zu senden;
ein optisches Fenster (3), das am Gehäuse bereitgestellt ist, wobei das Laserlicht, das vom Lasersender (2) gesendet wird, das Gehäuse (1) durch das optische Fenster (3) verlässt und Laserlicht, das durch ein Zielobjekt reflektiert wird, durch das optische Fenster (3) in Innere des Gehäuses zurückkehrt;
einen Laserempfänger (4), der im Gehäuse bereitgestellt ist und konfiguriert ist, das Laserlicht, das von dem Zielobjekt reflektiert wurde, zu empfangen; und
eine optische Vorlage (5), wobei ein Abschnitt des Laserlichts, das vom Lasersender (2) gesendet wurde, durch die optische Vorlage zum Laserempfänger (4) reflektiert wird und die optische Vorlage mehrere Untervorlagen umfasst,
**dadurch gekennzeichnet, dass** an der Grenze jeder Untervorlage ein lichtabsorbierender Bereich bereitgestellt ist.

2. Laserradar nach Anspruch 1, wobei das Laserradar ein an einem Fahrzeug montiertes Laserradar ist.

3. Laserradar nach Anspruch 1 oder 2, wobei das Laserradar Folgendes umfasst:
einen Drehspiegel (6), wobei der Drehspiegel eine Drehachse aufweist, die zu einer XOY-Ebene senkrecht ist; und
einen Galvospiegel (7), wobei der Galvospiegel eine Drehachse aufweist, die zu einer XOZ-Ebene senkrecht ist.

4. Laserradar nach einem der Ansprüche 1 bis 3, wobei an der Grenze der optischen Vorlage ein lichtabsorbierender Bereich bereitgestellt ist.

5. Laserradar nach einem der Ansprüche 1 bis 4, wobei auf einem optischen Pfad im Gehäuse die optische Vorlage bereitgestellt ist.

6. Laserradar nach einem der Ansprüche 1 bis 5, wobei das Laserradar ein Optisch/Elektrisch-Umsetzermodul und einen Kabelverbinder umfasst.

7. Laserradarbasiertes Detektionsverfahren, das eine Detektion unter Verwendung eines Laserradars nach einem der Ansprüche 1 bis 6 durchführt, wobei das laserradarbasierte Detektionsverfahren die folgenden Schritte umfasst:
a) Kalibrieren eines Parameters einer optischen Vorlage, um einen Normwert zu erhalten; und
b) Messen des Parameters der optischen Vorlage, um einen Messwert zu erhalten, und Vergleichen des Messwerts mit dem Normwert, wobei dann, wenn eine Differenz zwischen dem Messwert und dem Normwert einen bestimmten Schwellenwert überschreitet, bestimmt wird, dass das Laserradar fehlerhaft ist.

8. Laserradarbasiertes Detektionsverfahren nach Anspruch 7, wobei der Parameter der optischen Vorlage die Reflexionsintensität der optischen Vorlage für Laserlicht und Koordinaten der optischen Vorlage umfasst.

9. Laserradarbasiertes Detektionsverfahren nach Anspruch 8, wobei ein geometrisches Zentrum oder ein optischer Schwerpunkt der optischen Vorlage als die Koordinaten der optischen Vorlage berechnet wird.

10. Laserradarbasiertes Detektionsverfahren nach einem der Ansprüche 7 bis 9, wobei die Grenze der optischen Vorlage auf der Grundlage einer plötzlichen Änderung der Reflexionsintensität in der Nähe eines lichtabsorbierenden Bereichs bestimmt wird.

11. Laserradarbasiertes Detektionsverfahren nach einem der Ansprüche 7 bis 10, wobei das Laserradar ein an einem Fahrzeug montiertes Laserradar ist und in Schritt b) ein Parameter der optischen Vorlage während der Fahrt eines Fahrzeugs in Echtzeit gemessen wird.

## Revendications

1. Radar laser comprenant :
un boîtier (1) ;
un émetteur laser (2) placé dans le boîtier, configuré pour émettre une lumière laser ;
une fenêtre optique (3) placée sur le boîtier, dans lequel la lumière laser émise depuis l'émetteur laser (2) quitte le boîtier (1) à travers la fenêtre optique (3), et la lumière laser réfléchie par un objet cible retourne à l'intérieur du boîtier à travers la fenêtre optique (3) ;
un récepteur laser (4) placé dans le boîtier, configuré pour recevoir la lumière laser réfléchie par l'objet cible ; et
un modèle optique (5), dans lequel une partie de la lumière laser émise depuis l'émetteur laser (2) est réfléchie par le modèle optique vers le récepteur laser (4), dans lequel le modèle optique comprend une pluralité de sous-modèles et **caractérisé en ce qu'**une région d'absorption de lumière est placée à la limite de chaque sous-modèle.

2. Radar laser selon la revendication 1, dans lequel le radar laser est un radar laser monté sur un véhicule.

3. Radar laser selon la revendication 1 ou 2, dans lequel le radar laser comprend :
un miroir rotatif (6), le miroir rotatif ayant un axe de rotation perpendiculaire à un plan XOY ; et
un miroir galvo (7), le miroir galvo ayant un axe de rotation perpendiculaire à un plan XOZ.

4. Radar laser selon l'une quelconque des revendications 1 à 3, dans lequel une région d'absorption de lumière est placée à la limite du modèle optique.

5. Radar laser selon l'une quelconque des revendications 1 à 4, dans lequel le modèle optique est placé dans un chemin optique à l'intérieur du boîtier.

6. Radar laser selon l'une quelconque des revendications 1 à 5, dans lequel le radar laser comprend un module de conversion optique-électrique et un connecteur de câble.

7. Procédé de détection basé sur un radar laser, qui effectue une détection au moyen d'un radar laser selon l'une quelconque des revendications 1 à 6, dans lequel le procédé de détection basé sur le radar laser comprend les étapes suivantes :
a) l'étalonnage d'un paramètre d'un modèle optique pour obtenir une valeur standard ; et
b) la mesure du paramètre du modèle optique pour obtenir une valeur de mesure et la comparaison de la valeur de mesure avec la valeur standard, et si une différence entre la valeur de mesure et la valeur standard dépasse un seuil spécifique, il est déterminé que le radar laser est défectueux.

8. Procédé de détection basé sur un radar laser selon la revendication 7, dans lequel le paramètre du modèle optique comprend l'intensité de réflexion du modèle optique pour la lumière laser et les coordonnées du modèle optique.

9. Procédé de détection basé sur un radar laser selon la revendication 8, dans lequel un centre géométrique ou un centre de gravité optique du modèle optique est calculé en tant que coordonnées du modèle optique.

10. Procédé de détection basé sur un radar laser selon l'une quelconque des revendications 7 à 9, dans lequel la limite du modèle optique est déterminée sur la base d'un changement soudain de l'intensité de réflexion près d'une région d'absorption de lumière.

11. Procédé de détection basé sur un radar laser selon l'une quelconque des revendications 7 à 10, dans lequel le radar laser est un radar laser monté sur un véhicule, et à l'étape b), un paramètre du modèle optique est mesuré en temps réel pendant le déplacement d'un véhicule.
